# NEUE EUROPÄISCHE PATENTSCHRIFT

(11) **EP 0 847 487 B2**
(45) Veröffentlichungstag und Bekanntmachung des Hinweises auf die Entscheidung über den Einspruch: **20.10.2004**
(45) Hinweis auf die Patenterteilung: 03.11.1999
(21) Anmeldenummer: 96937185.5
(22) Anmeldetag: 31.08.1996
(51) Int. Cl.: F02B 75/06, H02P 7/00

(54) **ANTRIEBSSYSTEM MIT ANTRIEBSMOTOR, ELEKTRISCHER MASCHINE UND BATTERIE**
DRIVE SYSTEM WITH A DRIVE ENGINE, AN ELECTRICAL MACHINE AND A BATTERY
SYSTEME D'ENTRAINEMENT AVEC MOTEUR D'ENTRAINEMENT, MOTEUR ELECTRIQUE ET BATTERIE

(30) Priorität: 31.08.1995 DE 19532163; 31.08.1995 DE 19532164; 31.08.1995 DE 19532135; 31.08.1995 DE 19532136; 31.08.1995 DE 19532128; 31.08.1995 DE 19532129
(43) Veröffentlichungstag der Anmeldung: 17.06.1998
(73) Patentinhaber: Continental ISAD Electronic Systems GmbH & Co. oHG, 86899 Landsberg/Lech (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: PCT/DE1996/001663
(87) Internationale Veröffentlichungsnummer: WO 1997/008439

(56) Entgegenhaltungen:
- EP-A- 0 530 659
- EP-A- 0 557 522
- US-A- 4 025 860
- US-A- 4 066 936
- US-A- 5 359 308
- PATENT ABSTRACTS OF JAPAN vol. 95, no. 004 & JP,A,07 105943 (SANYO ELECTRIC CO LTD), 21.April 1995,
- "HYBRID III: Concepts for the electric system of a hybrid passenger car" Kung et al

## Beschreibung

Die Erfindung betrifft ein Antriebssystem mit einem Antriebsmotor, und zwar einem Verbrennungsmotor eines Kraftfahrzeugs und einer elektrischen Maschine.

Antriebssysteme von Kraftfahrzeugen mit Verbrennungsmotor sind herkömmlicherweise mit zwei elektrischen Maschinen ausgerüstet. Eine elektrische Maschine dient als Generator zur Stromversorgung (Lichtmaschine), eine weitere zum Starten des Verbrennungsmotors (Starter).

Femerhat ein Kraftfahrzeug eine Batterie, welche die Funktion eines chemischen Speichers der in der Lichtmaschine erzeugten Energie übernimmt. Die in der Batterie gespeicherte Energie wird zum Starten des Kraftfahrzeugs sowie zum Betreiben elektrischer Verbraucher verwendet.

Elektrische Maschinen, Verbrennungsmotor und Batterie werden für den jeweiligen Anwendungsfall aufeinander abgestimmt. Dabei soll die Batterie in Antriebssystemen herkömmlicher Kraftfahrzeuge hohe Ströme liefern, um die bei Verbrennungsmotoren benötigte hohe Startleistung zu erbringen. Außerdem muß sie, insbesondere bei nicht angetriebener Lichtmaschine, elektrische Energie für die elektrischen Verbraucher bereitstellen.

Herkömmlicherweise wird im Kraftfahrzeug ein Blei/Schwefelsäure-Akkumulator als Batterie verwendet (s. Robert Bosch GmbH, "Kraftfahrtechnisches Handbuch", VDI-Verlag, Düsseldorf 1991, S.763 f.). Dieser zeichnet sich durch hohe Zyklenzahl und hohe Zuveriässigkeit aus und ist zugleich kostengünstig. Die bekannten Kraftfahrzeugs-Antriebssysteme mit Blei/Schwefelsäure-Akkumulator haben aber den Nachteil, daß sie in ihrer Leistungs- und Energiedichte beschränkt sind.

Aus der Druckschrift L. Küng et al., Hybrid III, Concepts for the electric system of a hybrid passenger car, Symp Proc 11 th Int Vehicle Symp, 1992, nach welcher der Oberbegriff des Anspruchs 1 gebildet wurde, ist ein Hybridfahrzeug bekannt, bei dem eine Fahrbatterie auf einem erhöhten Spannungsniveau eines Zwischenkreises vorgesehen ist. Bei sehr niedriger Leistungsanforderung fährt das Fahrzeug rein elektrisch, bei etwas höherer Leistungsanforderung in einem verbrennungsmotorischen oder elektrischen Zyklusbetrieb, und bei hoher Leistungsanforderung verbrennungsmotorisch. Zur Beschleunigungsunterstützung im Zyklusbetrieb ist ein mechanisches Schwungrad vorgesehen.

Die vorliegende Erfindung geht von dem technischen Problem aus, ein einfach aufgebautes Hybridfahrzeug mit guten Fahrleistungen bereitzustellen.

Sie erreicht dies mit einem Antriebssystem gemäß Anspruch 1.

Das Antriebssystem ist in einem Fahrzeug, insbesondere in einem Kraftfahrzeug angeordnet. Als (Haupt-)Antriebsaggregat weist es einen Motor, insbesondere einen Verbrennungsmotor auf. Der Verbrennungsmotorwird beim Antrieb des Fahrzeugs zeitweise von einer elektrischen Maschine unterstützt. Es können auch mehrere Motoren und/oder mehrere elektrische Maschinen vorhanden sein. Die elektrische(n) Maschine(n) wird/werden von einer oder mehreren Kurzzeitbatterien gespeist. Diese sind im Vergleich zu den Batterien herkömmlicher Antriebssysteme von Kraftfahrzeugen hoch belastbar und weisen eine kurze Entladedauer auf. Aus diesem Grund kann die von der Kurzzeitbatterie gespeiste elektrische Maschine eine hohe zusätzliche, nur über einen kurzen Zeitraum aufrechterhaltbare Antriebsleistung erbringen (kurzfristiges Beschleunigen, "Boosten").

Das erfindungsgemäße Antriebssystem stellt also einen Hochleistungsspeicher für kurzzeitige zusätzliche Beschleunigungsreserven bereit.

Ein derartiges Antriebssystem kann gegenüber herkömmlichen Systemen eine höhere Leistung bei gleichem Kraftstoffverbrauch erbringen bzw. bei gleicher Leistung den Kraftstoffverbrauch verringern. Der Grund ist der folgende:

Durchschnittliche Fahrten mit Kraftfahrzeugen sind dadurch gekennzeichnet, daß sich lang andauemde Phasen geringerer Anforderung an die Antriebsleistung mit kurz andauernden Phasen höherer Anforderung abwechseln. Beispielsweise folgt auf eine kurze Beschleunigungsphase nach dem Start eine lange Phase des Fahrens bei höherer konstanter Geschwindigkeit, darauf folgt eine kurze Beschleunigungsphase zum Überholen, usw.

Bei herkömmlichen Antriebssystemen sorgt der Verbrennungsmotor allein für den Antrieb. Dieser muß also in den lang andauernden Phasen geringerer Anforderung an die Antriebsleistung ein geringes, und in den kurz andauernden Phasen höherer Anforderung an die Antriebsleistung ein hohes Drehmoment liefern. Um Unabhängigkeit von der Motorgröße zu erreichen, bezieht man das vom Motor gelieferte Drehmoment auf das Hubvolumen des Motors (sog. Nutzmitteldruck oder effektiver Mitteldruck). Der Motor wird somit relativ lange im Bereich geringerer effektiver Mitteldrücke (d.h. bei Teillast), und relativ kurz im Bereich höherer effektiver Mitteldrücke (d.h. bei oder nahe bei Vollast) betrieben.

Effektiver Mitteldruck und Drehzahl legen den Betriebspunkt des Motors fest. Der Betriebspunkt beeinflußt wesentlich Geräusch, Abgasemission, Beanspruchung und spezifischen Kraftstoffverbrauch des Motors.

Der spezifische Kraftstoffverbrauch (d.h. der auf die Motorleistung bezogene Kraftstoffverbrauch) des Motors wird im wesentlichen vom effektiven Mitteldruck, und nur geringfügig von der Drehzahl beeinflußt. Bei geringeren effektiven Mitteldrücken ist der spezifische Kraftstoffverbrauch im allgemeinen relativ hoch, wohingegen er bei höheren effektiven Mitteldrücken im allgemeinen relativ gering ist

Der spezifische Kraftstoffverbrauch des Motors ist dessen Nutzwirkungsgrad umgekehrt proportional. Der Motor herkömmlicher Antriebssysteme wird demzufolge über große Zeiträume bei geringem und über kurze Zeiträume bei hohem Wirkungsgrad betrieben. Daraus ergibt sich ein ungünstiger Gesamtwirkungsgrad und ein hoher Kraftstoffverbrauch.

Beim erfindungsgemäßen Antriebssystem ist der Motor dagegen vorteilhaft kleiner ausgelegt, d.h. so, daß er bereits in den Phasen geringerer Leistungsanforderung bei bzw. nahe bei Vollast, d.h. im energetisch günstigeren Bereich höherer effektiver Mitteldrücke betrieben wird.

In Phasen höherer Leistungsanforderung sorgt dann die elektrische Maschine, und nicht der Motor für den zusätzlichen Antrieb ("Boosten"). Die Kurzzeitbatterie ist so ausgelegt, daß deren (kurze) Entladedauer größer ist als die Dauer einer Phase höherer Leistungsanforderung. Selbst dann, wenn in Phasen höherer Leistungsanforderung das System Motor - elektrische Maschine einen geringeren Wirkungsgrad hat als ein allein für den Antrieb sorgender Motor, kommt es zu einer Erhöhung des Gesamtwirkungsgrads. Der Grund ist, daß wie oben erläutert, die Phasen höherer Leistungsanforderung kürzer sind als die Phasen geringerer Leistungsanforderung.

Das erfindungsgemäße Antriebssystem wird demzufolge über große Zeiträume bei hohem und über kurze Zeiträume bei geringem Wirkungsgrad betrieben. Daraus ergibt sich ein höherer Gesamtwirkungsgrad. Das erfindungsgemäße Antriebssystem führt damit zu einer Verringerung des Kraftstoffverbrauchs und somit auch zu einer Verringerung der Schadstoffemission.

Außerdem hat das erfindungsgemäße Antriebssystem den Vorteil geringer Baugröße, geringen Gewichts und geringer Kosten. Der Grund liegt zum einen in der oben erläuterten kleineren Auslegung des Verbrennungsmotors, zum anderen in der Verwendung einer hoch belastbaren Batterie mit kurzer Entladedauer (Kurzzeitbatterie). Grundsätzlich wäre auch die Verwendung einer genauso hoch belastbaren Batterie mit langer Entladedauer, d.h. entsprechend höherer Kapazität (und damit gespeicherter Energie) denkbar. Batterien sind aber fertigungstechnisch und materialmäßlg um so aufwendiger, je höher Energiegewicht (in Wh/kg) und Energievolumen (in Wh/l) sind. Dies würde bei Verwendung einer hoch belastbaren Batterie mit langer Entladedauer im Vergleich zu einer Kurzzeitbatterie zu größerer Baugröße und höherem Gewicht und/oder zu höheren Kosten führen.

Außer einer hoch belastbaren Batterie wäre grundsätzlich auch die Verwendung einer gering belastbaren Batterie denkbar. Da jedoch bei gering belastbaren Batterien Leistungsgewicht (in W/kg) und Leistungsvolumen (in W/I) geringer sind, kann die für die oben erläuterte kraftstoffsparende Wirkung notwendige Leistung der elektrischen Maschine nur mit großen und schweren, gering belastbaren Batterien erreicht werden. Dies würde bei Verwendung einer gering belastbaren Batterie zu einem großen und schweren Gesamtsystem führen, was wiederum einen erhöhten Kraftstoffverbrauch zur Folge hätte. Das erfindungsgemäße System mit hoch belastbarer (Kurzzeit-)Batterie hat demgegenüber den Vorteil geringer Baugröße und geringen Gewichts und somit auch geringeren Kraftstoffverbrauchs.

Das erfindungsgemäße Antriebssystem hat somit zusammengefaßt die Vorteile
- geringen Gewichts
- geringer Baugröße
- geringer Kosten
- geringen Kraftstoffverbrauchs
- geringer Schadstoffemission.

Es wird somit ein leichtes, kompaktes und kostengünstiges Antriebssystem bereitgestellt, das gegenüber herkömmlichen Antriebssystemen bei gleicher Maximalleistung den Kraftstoffverbrauch verringert und somit einen Schritt auf dem Weg zum verbrauchsoptimierten Kraftfahrzeug darstellt

Das erfindungsgemäße Antriebssystem ermöglicht auch, eine höhere Maximalleistung gegenüber herkömmlichen Antriebssystemen bei gleichem Kraftstoffverbrauch zur Verfügung zu stellen.

Bei dem Motor handelt es sich um einen Hubkolbenmotor mit innerer Verbrennung, wie einen Ottooder Dieselmotor. Denkbar ist auch ein anderer Verbrennungsmotor, wie z.B. ein Hubkolbenmotor mit äußerer Verbrennung (Sterlingmotor) oder ein Kreiskolbenmotor (z.B. Wankelmotor).

Die elektrische Maschine ist jede Art von Maschine für Rotations- oder Translationsbewegungen, die als elektrischer Motor antreibend auf das Fahrzeug wirken kann. Sie kann als Synchron-, Asynchron- oder Reluktanzmaschine, insbesondere auch in Sektorbauweise ausgeführt sein.

Die elektrische Maschine kann zum Antreiben des Fahrzeugs direkt oder indirekt mit dem Motor gekoppelt sein. Beispielsweise kann ein Teil der Maschine, insbesondere der Rotor, mit dem Triebstrang des Motors drehfest gekoppelt sein, diesen mit einem zusätzlichen Drehmoment beaufschlagen und so zusätzlich zum Motor antreibend wirken. Außerdem kann die elektrische Maschine indirekt über ein oder mehrere Elemente, beispielsweise über Ritzel, über einen Ansatz an der Kurbelwelle, usw. ein Drehmoment auf den Triebstrang des Motors übertragen, das zusätzlich zum Motor beschleunigend wirkt.

Die elektrische Maschine kann aber auch als Teil einer vom Motor entkoppelten Antriebsvorrichtung zusätzlich zum Motor das Fahrzeug antreiben. Beispielsweise kann die elektrische Maschine ein Drehmoment auf einen eigenen Triebstrang übertragen und so zusätzlich zum Motor beschleunigend wirken.

Außerdem kann die elektrische Maschine vorteilhaft zusätzlich auch bremsend auf das Fahrzeug wirken. Die hierbei erzeugte Energie ist wenigstens teilweise in der Kurzzeit-batterie speicherbar (Anspruch 2). Die elektrische Maschine wird damit als Generator betrieben. Sie unterstützt das mechanische Bremssystem beim Abbremsen des Fahrzeugs. Beim mechanischen Abbremsen wird kinetische Energie des Fahrzeugs in Wärme umgewandelt, die i.a. nicht weiter genutzt wird. Beim elektrischen Bremsen wird dagegen kinetische Energie des Fahrzeugs in elektrische Energie umgewandelt. Durch die wenigstens teilweise Speicherung der beim Bremsen anfallenden elektrischen Energie in der Kurzzeitbatterie wird erreicht, daß diese weiterhin dem System zur Verfügung steht (beispielsweise zum späteren Beschleunigen des Fahrzeugs). Die Speicherung der Bremsenergie in der Kurzzeit-batterie führt zu einer weiteren Vergrößerung des Gesamtwirkungsgrads des Antriebssystems.

Eine Batterie ist allgemein eine Kombination von zwei oder mehr parallel oder in Serie geschalteten galvanischen Elementen. Im Unterschied zu einem Kondensator, in dem die Energie im wesentlichen in einem elektromagnetischen Feld gespeichert ist, erfolgt bei einer Batterie die Speicherung im wesentlichen elektrochemisch. Zu unterscheiden ist zwischen einmal verwendbaren Primär- und wiederaufladbaren Sekundärbatterien. Vorzugsweise kommen erfindungsgemäß Sekundärbatterien (Akkumulatoren) zum Einsatz, die nach dem Entladen durch die Zufuhr einer entsprechenden Energiemenge wieder in ihren ursprünglichen Zustand zurückgebracht werden können und so über einen längeren Zeitraum einsatzfähig bleiben.

Die Kurzzeitbatterie ist, wie oben erläutert, im Vergleich zu den in herkömmlichen Fahrzeugen verwendeten Batterien hoch belastbar und weist eine kurze Entladedauer auf.

Vorzugsweise beträgt die Entladedauer der Batterie 4 Minuten (Anspruch 3). Unter Entladedauer wird hier die minimale Zeitdauer zwischen Vollade- und Entladezustand der Batterie bei höchster zulässiger Dauerbelastung verstanden. Diese (minimale) Entladedauer orientiert sich zum einen an der Dauer der üblicherweise beim Gebrauch des Kraftfahrzeugs auftretenden kurz andauernden Phasen höherer Anforderung an die Antriebsleistung. Während einer solchen Phase unterstützt die elektrische Maschine den Motor beim Antrieb des Fahrzeugs. Die elektrische Maschine wird dabei von der Kurzzeitbatterie gespeist, die hierbei (teil-)entladen wird. Zum anderen muß die Dauer der zwischen den Phasen höherer Leistungsanforderung liegenden Phasen geringerer Leistungsanforderung berücksichtigt werden. Während einer solchen Phase wird die Batterie geladen. Die Batterie darf vorher nur soweit entladen worden sein, daß die Zeit zwischen zwei Phasen mit höherer Leistungsanforderung im wesentlichen zum Wiederaufladen ausreicht.

Durch die kurze Entladedauer der Batterie wird erreicht, daß eine hohe Leistung bei gleichzeitig geringer Kapazität zur Verfügung gestellt wird. Durch die geringe Batteriekapazität können deren Gewicht. Baugröße und Kosten gering gehalten werden. Dies führt dazu, daß auch das Antriebssystem leicht, klein und kostengünstig ist

Die Kurzzeitbatterie kann mit hohen Strömen belastet werden. Der maximale Entladestrom beträgt mehr als 10 CA, insbesondere 15 CA (Anspruch 4). Der Impulsstrom beträgt mehr als 100 A, insbesondere 120 A (Anspruch 5). Der Entladestrom wird auf die Nenn kapazität bezogen in CA angegeben. Beispielsweise wird eine Batterie mit einer Nennkapazität von 4 Ah bei 400 mA mit 0,1 CA, bei 4 A mit 1 CA und bei 40 A mit 10 CA belastet. Der maximale Entladestrom ist der maximal zulässige Strom, mit dem die Batterie über einen längeren Zeitraum (vom vollen Ladezustand bis zur Entladung) belastet werden kann. Der Impulsstrom ist der maximal zulässige Strom, mit dem die Batterie über einen kürzeren Zeitraum (zwei Sekunden) belastet werden kann.

Durch den hohen maximalen Impulsstrom kann die von der Kurzzeitbatterie gespeiste elektrische Maschine über einen sehr kurzen Zeitraum eine sehr große, durch den hohen maximalen Entladestrom über einen kurzen Zeitraum eine große Antriebsleistung erbringen. Die große bzw. sehr große Antriebsleistung der elektrischen Maschine dient in den kurzen Phasen hoher Anforderung an die Gesamtantriebsleistung des Fahrzeugs zur Unterstützung des Verbrennungsmotors. Wegen der großen bzw. sehr großen von der elektrischen Maschine erbringbaren Antriebsleistung muß der Verbrennungsmotor dann nur noch eine relativ geringere Antriebsleistung erbringen. Er kann deshalb entsprechend auf niedrigere Antriebsleistungen hin, also kleiner ausgelegt werden. Dadurch wird erreicht, daß er bereits in den langen Phasen mit geringer Anforderung an die Gesamtantriebsleistung des Fahrzeugs (während derer er allein für den Antrieb sorgt) bei höherem effektivem Mitteldruck (und damit höherem Wirkungsgrad) betrieben wird. Dadurch wird ein hoher Gesamtwirkungsgrad des Antriebssystems erreicht.

Neben hohen Impuls- und Entladeströmen weist die Kurzzeit-batterie vorzugsweise auch eine eine hohe Leistungsdichte von mehr als 250 W/kg, insbesondere 300 W/kg auf (Anspruch 6). So werden Gewicht und Baugröße der Kurzzeitbatterie und somit auch des Antriebssystems gering gehalten.

Die Kurzzeitbatterie weist eine Gesamtkapazität von weniger als 1200 Ah, insbesondere 1000 Ah auf (Anspruch 7). Kurzzeitbatterien, insbesondere mit hoher Leistungsdichte und hohem Leistungsvolumen bedingen aufwendige Ausgangsmaterialien und einen aufwendigen Produktionsprozeß. Die Kosten einer Batterie bestimmter Leistungsdichte und Leistungsvolumens wird im wesentlichen von der Gesamtkapazität bestimmt. Die Verwendung einer Batterie geringer Gesamtkapazität führt damit zu geringen Kosten für das Antriebssystem.

Beim erfindungsgemäßen Antriebssystem ist die Kurzzeitbatterie vorzugsweise ein alkalisches Sekundärsystem (Anspruch 8), vorzugsweise ein Nickel/Cadmium-System (Anspruch 9). Denkbar sind auch andere alkalische Akkumulatoren wie Nikkel/Eisen-Systeme (Anspruch 10). Vorteil alkalischer Systeme, insbesondere von Nickel/Cadmium- oder Nickel/Eisen-Systemen sind hohe Energiedichte, hohes Energievolumen, hohe Leistungsdichte und hohes Leistungsvolumen. Die Verwendung einer alkalischen Kurzzeitbatterie führt damit zu einem Antriebssystem geringer Baugröße und geringen Gewichts. Außerdem haben alkalische Systeme, insbesondere Nickel/Cadmium- und Nickel/Eisen-Systeme eine lange Standzeit im entladenen Zustand, sind tiefentladefähig, verkraften Bedienfehler, sind auch bei tiefen Temperaturen entladbar und mechanisch stabil.

Die Kurzzeitbatterie enthält Sinterelektroden (Anspruch 11) oder Faserstruktur-Elektroden (Anspruch 12). Die Sinterelektroden können als Sinterplatten oder Sinterfolienplatten ausgeführt sein. Bei diesen wird ein feinmaschiges Nickeldrahtgitter oder ein dünnes, perforiertes Nickelband verwendet, wodurch eine große wirksame aktive Oberflächen und ein reduzierter Innenwiderstand erreicht werden.

Bei Faserstruktur-Elektroden besteht die Elektrode aus einer dreidimensionalen Polypropylen-Faserstruktur, deren einzelne, mit Nickel belegte Fasern so dünn sind, daß gegenüber Sinterelektroden die wirksame aktive Oberfläche weiter vergrößert und der Innenwiderstand weiter reduziert wird.

Die große aktive Oberfläche und der geringe Innenwiderstand haben hohe Leistungs- und Energiedichten sowie Leistungs- und Energievolumina zur Folge. Die Verwendung von Kurzzeitbatterien mit Sinteroder Faserstrukturelektroden führt somit zu einem kleineren und leichteren Antriebssystem.

Die Kurzzeitbatterie ist vorzugsweise so ausgelegt, daß die in ihr gespeicherte Energie auch zur Stromversorgung der elektrischen Maschine zum Starten des Verbrennungsmotors geeignet ist (Anspruch 13). Die Kurzzeitbatterie zeichnet sich durch hohe Belastbarkeit und geringe Entladedauer aus. Sie sollte vorzugsweise diejenigen Aufgaben im Fahrzeug erfüllen, die dieser Auslegung entsprechen. Die elektrische Maschine benötigt zum Starten, ähnlich wie zum kurzfristigen zusätzlichen Beschleunigen ("Boosten"), kurzfristig hohe Ströme. Die Kurzzeitbatterie ist deshalb kapazitätsmäßig so ausgelegt, daß stets eine zum Starten des Motors ausreichend große Energiemenge gespeichert ist. Zusätzliches Beschleunigen und Starten erfolgen somit aus ein und derselben Batterie heraus, wodurch der Aufwand an Leistungselektronik verringert wird und Baugröße und Gewicht des Gesamtsystems gering gehalten werden.

Das Antriebssystem ist vorzugsweise so ausgebildet, daß die elektrische Maschine mit dem Triebstrang des Motors, insbesondere drehfest, gekoppelt ist . Die Kopplung kann indirekt etwa über Ritzel, Keilriemen, einen Ansatz an der Kurbelwelle usw. erfolgen, so daß die elektrische Maschine indirekt ein Drehmoment auf die Triebwelle des Motors übertragen kann. Besonders vorteilhaft ist ein Teil der Maschine, insbesondere der Läufer oder der Ständer, direkt mit der Triebwelle des Motors drehfest gekoppelt. Ein Vorteil ist, daß dann die elektrische Maschine Drehungleichförmigkeiten der Triebwelle direkt entgegengewirken kann. Drehungleichförmigkeiten treten bei Verbrennungsmotoren durch die auf die Triebwelle bauartbedingt wirkenden Gas- und Massekräfte auf.

Diesen kann dadurch entgegengewirkt werden, daß die Kurzzeitbatterie so ausgelegt ist, daß die in ihr gespeicherte Energie zum Entgegenwirken von Drehungleichförmigkeiten geeignet ist, wobei die elektrische Maschine die Welle bei einer negativen Drehungleichförmigkeit mit einem beschleunigenden (Zusatz-) Drehmoment beaufschlagen kann (Anspruch 14). Die zur Reduktion der bei Verbrennungsmotoren auftretenden Drehungleichförmigkeiten benötigte Leistung kann sehr groß sein. Insbesondere kann eine von einer herkömmlichen Fahrzeugbatterie gespeiste elektrische Maschine kein ausreichend großes Gegendrehmoment hervorrufen. Die verwendete Kurzzeitbatterie ist dagegen, wie erläutert, kurzfristig hoch belastbar, so daß die elektrische Maschine die Triebwelle mit einem ausreichenden Gegendrehmoment beaufschlagen und so Drehungleichförmigkeiten wirksam verringern kann. Diese führt zu einer Schonung der Triebwelle und zu einer Verringerung der Fahrgeräusche. Außerdem kann die Leerlaufdrehzahl abgesenkt werden.

Außerdem können Drehungleichförmigkeiten auch verringert werden, indem die elektrische Maschine die Welle bei einer positiven Drehungleichförmigkeit mit einem bremsenden (Zusatz-)Drehmoment beaufschlagt (Anspruch 15). Da die Kurzzeitbatterie, wie oben erläutert, vorteilhaft eine Sekundärbatterie ist, kann die dabei gewonnene Energie in dieser gespeichertwerden. Dies hat den Vorteil, daß die gespeicherte Energie wieder verwendet werden kann, beispielsweise zum Entgegenwirken von negativen Drehungleichförmigkeiten, zum Boosten oder zum Starten.

Vorzugsweise werden zur optimalen Verringerung von Drehungleichförmigkeiten beide Maßnahmen gemeinsam verwendet. Die Welle wird also mit einem schnell variierenden, alternierenden Drehmoment beaufschlagt, und zwar bei einer negativen Drehungleichförmigkeit mit einem antreibenden und bei einer positiven Drehungleichförmigkeit mit einem bremsenden Drehmoment.

Vorzugsweise ist die Kurzzeitbatterie derart ausgelegt, daß sie mit der beim Bremsen der Welle zur Verringerung des Antriebsschlupfes gewonnenen Energie ladbar ist (Anspruch 16). Eine Verringerung des Antriebsschlupfes wird durch eine Verkleinerung des Antriebsmoments, insbesondere durch Bremsen der Welle erreicht. Vorteilhaft wird die Kurzzeit-batterie mit der dabei gewonnene Energie geladen, wodurch der Kraftstoffverbrauch weiter reduziert wird. Eine Verringerung des Antriebsschlupfes führt zu erhöhter Fahrsicherheit.

Ebenso kann die Kurzzeitbatterie geladen werden, wenn die Welle zum Zweck einer Getriebesynchronisation sowie bei einer Anfahr- und Schaltkupplung von der elektrischen Maschine gebremst wird. Entsprechend kann die in der Kurzzeitbatterie gespeicherte Energie zum Beschleunigen der Welle zur Getriebesynchronisation verwendet werden (Anspruch 17). Diese Funktion sowie die vorher erwähnten Funktionen Beschleunigen und Bremsen des Fahrzeugs, Starten des Verbrennungsmotors, Drehungleichlörmigkeitsverringerung, Antriebsschlupfverringerung, usw. können auf mehrere elektrische Maschinen aufgeteilt werden. Besonders vorteilhaft werden diese Funktionen aber von einer einzigen, von der Kurzzeit-batterie gespeisten elektrischen Maschine wahrgenommen. Dadurch wird erreicht, daß das Antriebssystem geringe Baugröße und geringeres Gewicht aufweist und zudem kostengünstig ist.

Wird die elektrische Maschine mit generatorischer Funktion betrieben, wird die entstehende Energie zum Laden der Kurzzeitbatterie genutzt. Seibstverständlich kann die Kurzzeit-batterie auch von einer zusätzlichen Batterie geladen werden. Diese weist vorteilhaft - im Gegensatz zur Kurzzeit-batterie - ein geringes Leistungs-/Kapazitätsverhältnis auf. Die zweite Batterie kann also bezogen auf die von ihr gespeicherte Energie nicht hoch belastet werden. Dies führt zu einer großen Entladezeit bei geringen Entladeströmen. Das Antriebssystem weist somit vorteilhaft neben der Kurzzeitbatterie noch eine Langzeitbatterie auf (Anspruch 18). Die Langzeitbatterie dient vorteilhaft zur Stromversorgung elektrischer Verbraucher mit geringem Leistungs-, aber hohem Gesamtenergiebedarf (Klimamaschinen etc.), während die Kurzzeitbatterie elektrische Verbraucher mit hohem Leistungs-, aber geringem Gesamtenergiebedarf versorgt. Geringer belastbare Batterien sind bezogen auf die zur Verfügung gestellte Kapazität kostengünstiger als hoch belastbare Batterien. Da die hoch belastbare Kurzzeitbatterie kapazitätsmäßig klein und die nicht hoch belastbare Langzeitbatterie kapazitätsmäßig groß ausgelegt ist, können die Kosten des Gesamtsystems gering gehalten werden. Die Erfindung hat somit den Vorteil, ein Antriebssystem zur Verfügung zu stellen, bei dem die Stromversorgung auf die jeweilige Art von Verbraucher abgestimmt ist.

Aus diesem Grund ist vorteilhäft neben der Kurzzeitbatterie auch noch ein Kondensator vorgesehen (Anspruch 19). Dieser weist gegenüber der Kurzzeitbatterie eine geringere Kapazität auf. Auf der anderen Seite kann er schneller entladen und geladen werden. Vorteilhaft entlastet er die Kurzzeit-batterie insbesondere bei Aufgaben, bei denen eine sehr hohe Leistung bereitgestellt bzw. hohe Energiemengen in kurzer Zeit gespeichert werden müssen, z.B. bei der Verringerung von Drehungleichförmigkeiten.

Das Antriebssystem weist einen Wechselrichter auf. Dieser stellt der elektrischen Maschine die zur Erzeugung der elektromagnetischen Felder notwendigen Ströme und Spannungen variabler Amplitude, Frequenz und Phase zur Verfügung. Die Kurzzeit-Batterie ist dabei an dem Zwischenkreis des Wechselrichters angeschlossen. Gleiches gilt für den die Kurzzeⁱtbatterie unterstützenden Kondensator. Die exakte Steuerungsmöglichkeit mit dem Wechselrichter hat den Vorteil, daß insbesondere den schell variierenden Drehungleichförmigkeiten schnell und genau entgegengewirkt werden kann.

Die Erfindung wird nun anhand von Ausführungsbeispielen und der angefügten schematischen Zeichnung näher erläutert. In der Zeichnung zeigen:
- Fig. 1: eine unmaßstäblich-schematische Darstellung einer ersten Ausführungsform des Antriebsystems;
- Fig. 2: eine schematische Schnittdarstellung des Aufbaus einer Ni-Cd-Kurzzeitbatterie;
- Fig. 3: eine schematische Darstellung eines Verbrauchskennfelds des Verbrennungsmotors;
- Fig. 4: eine unmaßstäblich-schematische Darstellung einer zweiten Ausführungsform des Antriebssystams;
- Fig. 5: eine schematische beispielhafte Darstellung der Funktionsweise des Antriebssystems von Fig. 4.

In den Figuren tragen im wesentlichen funktionsgleiche Teile gleiche Bezugszeichen.

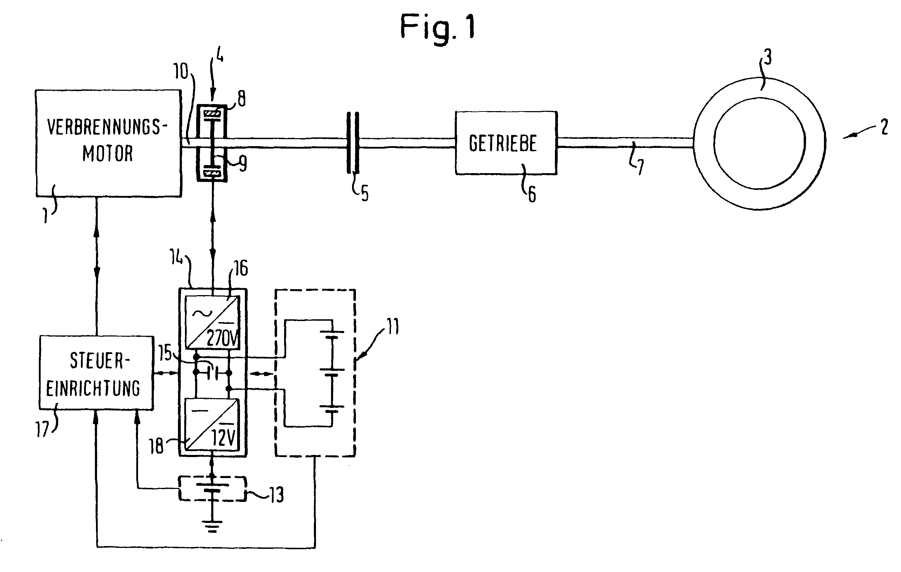

Ein Antriebssystem eines Fahrzeuges, z.B. eines Personenkraftwagens gemäß Fig. 1 weist als Antriebsaggregat einen Verbrennungsmotor 1 auf, bei dem es sich beispielsweise um einen Vierzylinder-Ottomotor handelt. Das vom Verbrennungsmotor 1 erzeugte Drehmoment kann über einen Triebstrang 2 auf Antriebsräder 3 übertragen werden. In Abtriebsrichtung ist im Triebstrang 2 nach dem Verbrennungsmotor 1 zunächst eine elektrische Maschine 4 angeordnet. Auf diese folgen eine Fahrkupplung 5, ein Getriebe 6 und ein Achsantrieb 7, welcher das Drehmoment auf die Antriebsräder 3 überträgt. Bei anderen (nicht gezeigten) Ausführungsformen ist im Triebstrang 2 zwischen Verbrennungsmotor 1 und elektrischer Maschine 4 eine weitere (durch Steuerung betätigte) Kupplung angeordnet, um beim Bremsen mit der elektrischen Maschine 4 einen Mitlauf des Verbrennungsmotors 1 zu vermeiden.

Die elektrische Maschine 4 - hier eine Drehstrommaschine in Asynchron- oder Synchron-Bauart - umfaßt einen Ständer 8 und einen Läufer 9. Ersterer stützt sich drehfest gegen den Verbrennungsmotor 1, ein (nicht gezeigtes) Fahrzeugchassis oder ein (nicht gezeigtes) Kupplungsgehäuse ab, wohingegen letzterer auf einer Verlängerung einer Kurbelwelle 10 des Verbrennungsmotors 1 sitzt und mit dieser drehfest gekoppelt ist. Sie rotieren also gemeinsam, ohne Zwischenschaltung eines Getriebes.

Die elektrische Maschine 4 fungiert als Zusatzmotor ("Booster"), um den Verbrennungsmotor 1 beim Beschleunigen des Fahrzeugs zu unterstützen. Auch dient sie als Starter für den Verbrennungsmotor 1 und kann somit auch einen herkömmlicherweise beim Kraftfahrzeug gesondert vorgesehenen Starter ("Anlasser') ersetzen. Außerdem fungiert sie als Generator zur Ladung mehrerer Kurzzeitbatterien 11, einer Langzeitbatterie 13 und zur Versorgung elektrischer Verbraucher und ersetzt damit eine herkömmlicherweise im Fahrzeug vorhandene Lichtmaschine.

Ein Wechselrichter 14 liefert dem Ständer 8 der elektrischen Maschine 4 bei einer hohen Taktfrequenz pulsweitenmodulierte Spannungsimpulse, die unter der Wirkung der Maschineninduktivität im wesentlichen sinusförmige Dreiphasen-Ströme ergeben, deren Amplitude, Frequenz und Phase frei wählbar ist.

Der Wechselrichter 14 ist ein Spannungszwischenkreis-Wechselrichter und umfaßt drei Baugruppen: einen Gleichspannungsumsetzer 18 (Eingangsbaugruppe), welcher Gleichspannung von einem niedrigen Niveau (hier 12 V) auf ein höheres Zwischenkreisniveau (hier 270 V) und in umgekehrter Richtung umsetzt, einen elektrischen Zwischenkreisspeicher 15, hier ein Kondensator bzw. eine Anordnung parallel geschalteter Kondensatoren, und einen Maschinenwechseirichter 16 (Ausgangsbaugruppe), welcher aus der Zwischenkreis-Gleichspannung die (getaktete) Dreiphasen-Wechselspannung variabler Amplitude, Frequenz und Phase erzeugen kann oder - bei generatorischem Betrieb der elektrischen Maschine 4 - derartige beliebige Wechselspannungen in die Zwischenkreis-Gleichspannung umsetzen kann.

Der Zwischenkreisspeicher 15 ist mit mehreren, hier 225 in Serie geschalteten Kurzzeitbatterien 11 mit je 1,2 V Nennspannung verbunden (in der Zeichnung sind nur drei Kurzzeitbatterien dargestellt). Es ergibt sich eine Zwischenkreisspannung von 270 V.

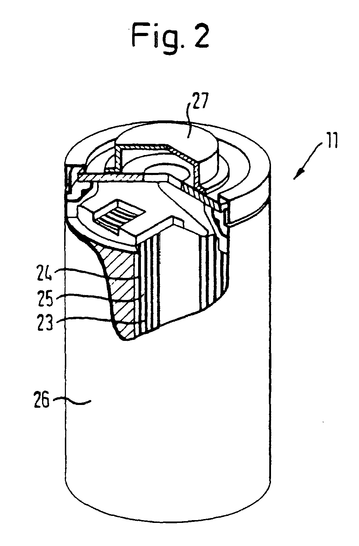

Die Kurzzeitbatterie 11 mit an sich bekannter Grundform ist in Fig. 2 dargestellt. Sie ist ein zylindrisches Ni-Cd-Sekundärsysten mit positiven Sinterelektroden 23 und negativen Elektrodeposit-Elektroden 24. Diese sind hochporöse, spiralförmig aufgewickelte Träger mit großen wirksamen aktiven Massen. Die Elektroden 23, 24 befinden sich in dicht verschlossenen, zylindrischen Stahlgehäusen. Als Separator 25 dient ein Kunststoffvlies. Das Gehäuse ist ein Becher 26 aus vernickeltem Stahlblech. Der Becher 26 dient gleichzeitig als negativer Pol, der Zellendeckel 27 als positiver Pol. Durch die Beschichtungen der negativen Elektrode 24, die den Gasverzehr erhöhen, und Zusätze in der positiven Elektrode 23 wird die Ladungsaufnahme erhöht und so die Ladezeit gering gehalten.

Jede Kurzzeitbatterie 11 ist kontinuierlich mit Strömen von bis zu 15 CA hoch belastbar. Die Entladedauer beträgt dann 4 Minuten. Kurzfristig (bis zu 2 Sekunden) ist ein impulsstrom von 120 A möglich. Die Kurzzeitbatterie weist eine Leistungsdichte von 300 W/kg und eine Nennkapazität von 4 Ah bei 0,2 CA auf. Sie ist schnelladbar mit Strömen von bis zu 2 CA.

Derartige zylindrische Ni-Cd-Zellen werden üblicherweise in Haushaltsgeräten, Elektrowerkzeugen und Telefonen, nicht aber in herkömmlichen Antriebssystemen von Kraftfahrzeugen eingesetzt.

Die gemäß Fig. 1 mit dem Zwischenkreis des Wechselrichters 19 verbundenen, in Serie geschalteten Kurzzeitbatterien 11 können kurzfristig eine hohe Leistung erbringen. Diese dient dazu, die zum kurzfristigen zusätzlichen Beschleunigen ("Boosten") von der elektrischen Maschine 4 benötigte Energie zur Verfügung zu stellen. Außerdem liefern die Kurzzeitbatterien 11 die Energie für das Starten des Verbrennungsmotors 1. Zudem versorgen sie verschiedene Hochleistungsverbraucher, wie eine Klimamaschine und Servoantriebe (nicht dargestellt) mit elektrischer Energie. Während derartige Hochleistungsverbraucher herkömmlicherweise durch mechanische Kopplung vom Verbrennungsmotor 1 angetrieben werden, erlaubt hier das zur Verfügung stehende hohe Spannungsniveau einen wirkungsgradmäßig günstigeren, rein elektrischen Antrieb.

Daneben dienen die Kurzzeitbatterien 11 auch der Speicherung derjenigen Energie, die beim Bremsen des Fahrzeugs durch die elektrische Maschine 4 anfällt.

In Figur 1 kann der Gleichspannungsumsetzer 16 des Wechselrichters 14 niederspannungsseitig mit der Langzeitbatterie 13 und verschiedenen elektrischen Verbrauchern (nicht dargestellt) mit niedriger Leistungsaufnahme, wie beispielsweise Beleuchtung und elektronische Geräte, verbunden sein. Der Wechselrichter 14 kann einerseits Strom auf niedrigem Spannungsniveau zum Laden der Langzeitbatterie 13 und Versorgen der elektrischen Verbraucher liefern, andererseits kann er der Langzeitbatterie 13 Strom auf niedrigem Spannungsniveau entnehmen.

Eine Steuereinrichtung 17 gibt dem Wechselrichter 14 durch entsprechende Ansteuerung seiner Halbleiterschalter zu jedem Zeitpunkt vor, welche Amplitude, Frequenz und Phase die von ihm zu erzeugende Wechselspannung haben soll, um das von der elektrischen Maschine 4 zu liefernde Antriebs- oder Bremsmoment herbeizuführen.

Die Steuereinrichtung 17 kommuniziert mit einer Vielzahl weiterer Steuergeräte: Ein (nicht gezeigtes) Energieverbrauchs-Steuergerät gibt an, wieviel Energie zum Laden der Kurzzeitbatterie 11, der Langzeitbatterie 13, zur Versorgung der Niederspannungs- und der Hochleistungsverbraucher benötigt wird, so daß die Steuereinrichtung 17 ggf. eine bremsende Wirkung der elektrischen Maschine 4 veranlassen kann.

Ein (nicht gezeigtes) Motorsteuergerät gibt der Steuereinrichtung 17 vor, ob und wie stark die elektrische Maschine 4 (z.B. zur Erzielung einer Start- oder Boostfunktion) antreibend oder (z.B. zur Unterstützung der mechanischen Bremse) bremsend wirken soll. Das Motorsteuergerät steuert gleichzeitig auch Leistung, Drehmoment und Kraftstoffverbrauch des Motors 1 über Kraftstoffzufuhr, Drosselklappenstellung, Kraftstoffeinspritzung (Zeitpunkt und Menge), Zündzeitpunkt, etc.

Die Steuerung des Systems elektrische Maschine 4 - Verbrennungsmotor 1 erfolgt in Abhängigkeit von benutzergesteuerten Größen wie Fahrpedalstellung, vorgewählte Fahrgeschwindigkeit, gewählte Getriebe-Gangstufe, Brems- und Kupplungsbetätigung, Fahrcharakteristik in der Fahr-Vorgeschichte, etc. und Betriebsgrößen wie Drehzahl, Kurbelwellenwinkel, Drehmoment, Gasdruck, Klopfen, Antriebsschlupf, Fahrgeschwindigkeit etc.

Insbesondere steuert das Motorsteuergerät das System elektrische Maschine 4 - Motor 1 so, daß der Motor 1 überwiegend, nämlich während der lang andauemder Phasen geringerer Anforderung an die Gesamtantriebsleistung im energetisch günstigen Bereich höherer effektiver Mitteldrücke betrieben wird. Der Motor 1 sorgt dann allein für den Antrieb des Fahrzeugs. Während der kurz andauernden Phasen höherer Anforderung an die Gesamtantriebsleistung, z.B. beim Anfahren oder beim Überholen, unterstützt die elektrische Maschine 4 den Motor 1. Der Motor 1 kann somit bei gleicher Maximalleistung des Antriebssystems kleiner ausgelegt werden.

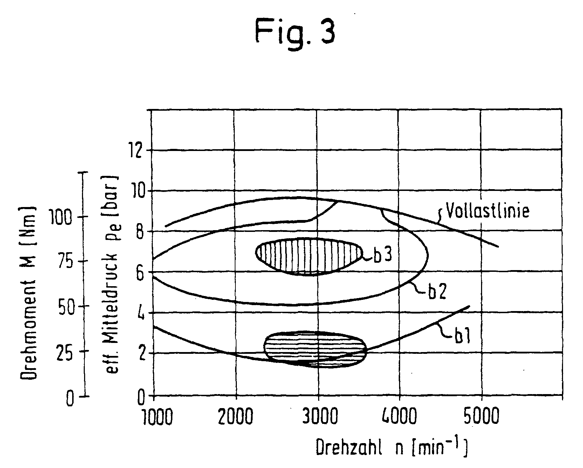

Die sich ergebende kraftstoffsparende Wirkung verdeutlicht Fig. 3. Dargestellt ist das Verbrauchs-Kennfeld eines Viertakt-Ottomotors. In diesem sind Drehmoment und effektiver Mitteldruck als Ordinate und Drehzahl als Abszisse aufgetragen. Eingetragen ist die Vollastlinie sowie drei Linien b1, b2, b3 konstanten spezifischen Kraftstoffverbrauchs. Bei b1 weist der Motor 1 einen hohen, bei b2 einen mittleren und bei b3 einen geringen spezifischen Kraftstoffverbrauch auf. Deutlich wird, daß der spezifische Kraftstoffverbrauch zu einem großen Teil vom effektiven Mitteldruck, und zu einem kleinen Teil von der Drehzahl abhängt. Dargestellt sind auch die (Mitteldruck-)Bereiche, in denen während der lang andauernden Phasen geringer Anforderung an die Gesamtantriebsleistung Motoren herkömmlicher Antriebssysteme (längsschraffiert) und des erfindungsgemäßen Antriebssystems (querschraffiert) betrieben werden. Der Verbrennungsmotor 1 wird also überwiegend bei geringem spezifischen Kraftstoffverbrauch und somit bei hohem Wirkungsgrad betrieben.

Zum Starten des Verbrennungsmotors 1 kann das Motor-Steuergerät das Soll-Drehmoment auf der Grundlage gespeicherter Werte bestimmen, die den zeitlichen Soll-Verlauf der Drehzahl oder des Drehmoments der elektrischen Maschine 4 während des Startvorgangs vorgeben, ggf. ergänzt durch eine Messung dieser Größen und eine rückgekoppelte Regelung, welche die Einhaltung der Vorgaben sicherstellt.

Außerdem gibt ein ASR-Steuergerät (nicht dargestellt) bei Vorliegen eines Antriebsschlupfes vor, daß die elektrische Maschine 4 vorübergehend als generatorische Bremse betrieben werden soll. Ein Getriebesynchronisations-Steuergerät (nicht dargestellt) gibt vor, daß die elektrische Maschine die Welle zur Getriebesynchronisation beschleunigen oder bremsen soll.

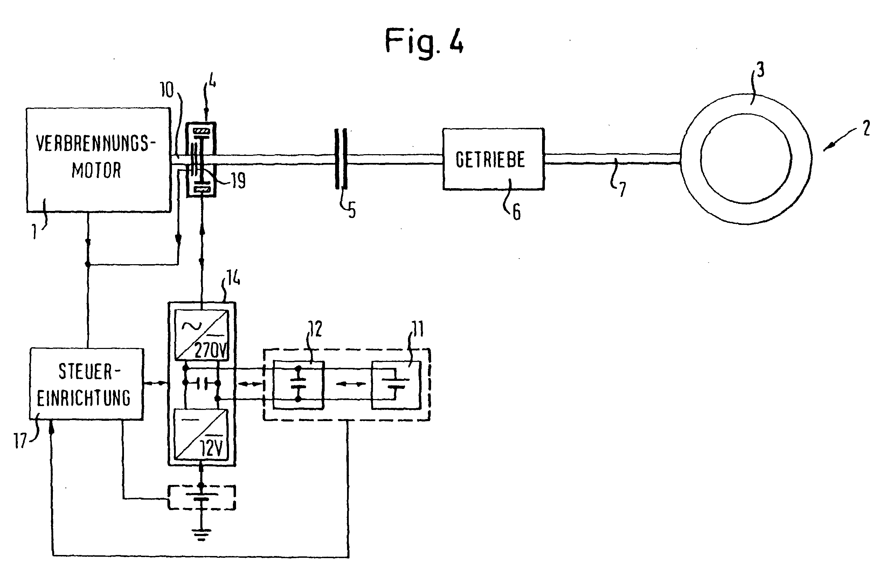

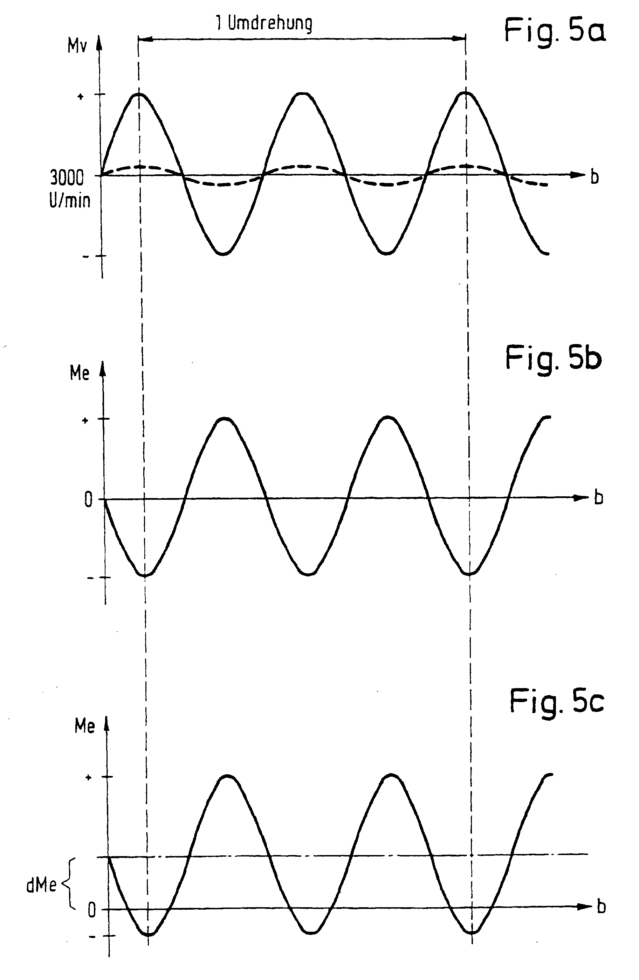

Zum Entgegenwirken von Drehungleichförmigkeiten ist die in Fig. 4 dargestellten Ausführungsform vorteilhaft. Fig. 5 a veranschaulicht (mit durchgezogener Linie) das Drehmoment Mv eines Motors 1 als Funktion des Kurbelwellenwinkels b. Dieses weist periodisch um ein mittleres Drehmoment Drehmomentschwankungen zu kleineren und größeren Drehmomenten hin aus, welche in diesem idealisierten Beispiel insgesamt einen im wesentlichen sinusförmigen Verlauf haben. Die relativ großen Drehmomentschwankungen werden von den im Motor 1 wirkenden Gas- und Massekräften hervorgerufen.

In Fig. 5b ist das Drehmoment Me, das von der elektrischen Maschine zur Verringerung der Drehmomentschwankungen aufgebracht wird, als Funktion des Wellenwinkels b dargestellt. Der Verlauf dieses Drehmoments entspricht weitgehend dem des Motor-Drehmoments Mv, ist jedoch entgegengesetzt gerichtet. Es ergibt sich eine Verringerung oder sogar praktisch ein Verschwinden der Drehmomentschwankungen Mv, wie in Fig. 5a durch die gestrichelte Linie veranschaulicht ist.

Bei der in Fig. 5b gezeigten Betriebsweise sind die negativen und positiven Drehmomentextrema betragsmäßig gleich groß. Die bei einer Bremsphase gewonnene Energie ist also im wesentlichen gleich groß wie die bei der folgenden Antriebsphase benötigte Energie.

Ein Beispiel für eine demgegenüber modifizierte Betriebsweise des Systems zeigt Fig. 5c. Der ze itliche Verlauf des Gesamtdrehmoments entspricht dem von Fig. 5b, jedoch ist es um einen bestimmten Betrag dMe in positive Richtung verschoben. Der elektrischen Maschine wird also im Mittel mechanische Energie zugeführt, wodurch eine antreibende Wirkung, beispielsweise zum kurzfristigen Beschleunigen, erzielt wird.

Ist der in Fig. 5b gezeigte Verlauf des Gesamtdrehmoments in negativer Richtung verschoben (hier nicht dargestellt), wirkt die elektrische Maschine 4 im Mittel bremsend. Die hierbei entstehende Energie dient beispielsweise zum Laden der Kurzzeitbatterie 11.

Beim Entgegenwirken von Drehschwingungen oder bei Aufbringen eines zusätzlichen bremsenden Drehmoments wird dem System Welle-Motor mechanische Energie entzogen und in elektrische Energie umgewandelt. Die elektrische Maschine 4 wirkt dann als Generator.

Gemäß Fig. 4 ist die elektrische Maschine 4 mit einem Drehtransformator 19 (sog. Resolver) ausgerüstet. Dieser liefert ein drehwinkelabhängiges Signal, das einer Steuereinrichtung 18 zugeführt wird. Diese steuert den Wechselrichter 14 so, daß Drehungleichförmigkeiten in der oben beschriebenen Weise entgegengewirkt wird.

Beim Speichern der beim Verringern einer positiven Drehungleichförmigkeit anfallenden Energie wird die Kurzzeitbatterie 11 von einem Kondesator 12 unterstützt. Dieser dient auch zum Bereitstellen der beim Verringern einer negativen Drehungleichförmigkeit notwendigen Energie.

Die Steuerung der zur Verringerung der Drehungleichförmigkeiten von der elektrischen Maschine 4 aufzubringenden Momente über die Steuereinrichtung 17 erfolgt z.B. mit Hilfe einer Kennfeldsteuerung, indem die Steuereinrichtung 17 als Eingangsinformation Winkellage der Welle 10, die momentane mittlere Drehzahl und ggf. weitere Betriebsparameter, wie z.B. die Drosselklappenstellung, erhält undaus einem gespeicherten Kennfeld die momentan zu erwartende Drehungleichförmigkeit in Abhängigkeit von diesen Betriebsparametem ermittelt. Eine andere Möglichkeit besteht darin, tatsächlich vorliegende Drehungleichförmigkeiten zu ermitteln. Möglich ist auch eine Kombination aus Regelung und Steuerung.

Aus dem ermittelten Wert für die momentane Drehungleichförmigkeit werden entsprechende (gegenphasige) Werte der von der elektromagnetischen Wirkvorrichtung aufgebrachten, schnell variierenden Drehmomente abgeleitet, dem ggf. ein positives oder negatives Zusatz-Drehmoment gewünschter Stärke additiv überlagert wird.

Es wird also ein kraftstoffsparendes, kompaktes und leichtes Antriebssystem zur Verfügung gestellt, mit dem zudem noch Drehungleichförmigkeiten entgegengewirkt werden kann.

## Patentansprüche

1. Antriebssystem mit
einem als Antriebsmotor eines Kraftfahrzeugs wirkenden Verbrennungsmotor (1),
einer wechselrichtergesteuerten elektrischen Drehstrommaschine (4), die zusätzlich antreibend wirkt,
einem Wechselrichter (14) mit einem Zwischenkreis auf einem gegenüber einem Niederspannungsnetz erhöhten Spannungsniveau,
wenigstens einer Batterie (11), welche auf dem erhöhten Spannungsniveau des Zwischenkreises liegt und welche die bei antreibender Wirkung der elektrischen Maschine (4) benötigte Energie liefert,
**dadurch gekennzeichnet, daß**
die Drehstrommaschine den Verbrennungsmotor (1) zeitweise antreibend unterstützt, indem sie in Phasen hoher Anforderung an die Gesamtantriebsleistung, und zwar Phasen der Fahrzeugbeschleunigung, zusätzlich zum Verbrennungsmotor (1) antreibend wirkt, und
daß die Batterie (11) eine Kurzzeitbatterie mit einer Entladedauer von weniger als 7 Minuten ist.

2. Antriebssystem nach Anspruch 1, bei welchem die elektrische Maschine (4) zusätzlich bremsend wirkt und die hierbei erzeugte Energie wenigstens teilweise in der Kurzzeitbatterie (11) speicherbar ist.

3. Antriebssystem nach einem der vorigen Ansprüche, bei welchem die Kurzzeitbatterie (11) eine Entladedauer von 4 Minuten aufweist.

4. Antriebsystem nach einem der vorigen Ansprüche, bei welchem der maximale Entladestrom der Kurzzeitbatterie (11) mehr als 10 CA, insbesondere 15 CA beträgt.

5. Antriebssystem nach einem der vorigen Ansprüche, bei welchem der Impulsstrom der Kurzzeitbatterie (11) mehr als 100 A, insbesondere 120 A beträgt.

6. Antriebssystem nach einem der vorigen Ansprüche, bei welchem die Kurzzeitbatterie (11) eine Leistungsdichte von mehr als 250 W/kg, insbesondere 300 W/kg aufweist.

7. Antriebssystem nach einem der vorigen Ansprüche, bei welchem die Kurzzeitbatterie (11) eine Gesamtkapazität von weniger als 1200 Ah, insbesondere 1000 Ah aufweist.

8. Antriebssystem nach einem der vorigen Ansprüche, bei welchem die Kurzzeitbatterie (11) ein alkalisches Sekundärsystem ist.

9. Antriebssystem nach einem der vorigen Ansprüche, bei welchem die Kurzzeitbatterie (11) ein Nickel/Cadmium-System ist.

10. Antriebssystem nach einem der vorigen Ansprüche, bei welchem die Kurzzeitbatterie (11) ein Nickel/Eisen-System ist.

11. Antriebssystem nach einem der vorigen Ansprüche, bei welchem die Kurzzeitbatterie (11) wenigstens eine Sinterelektrode (23) aufweist.

12. Antriebssystem nach einem der vorigen Ansprüche, bei welchem die Kurzzeitbatterie (11) wenigstens eine Faserstruktur-Elektrode aufweist.

13. Antriebssystem nach einem der vorigen Ansprüche, bei welchem die Kurzzeitbatterie (11) derart ausgelegt ist, daß die in ihr gespeicherte Energie zum Starten des Verbrennungsmotors (1) geeignet ist.

14. Antriebssystem nach einem der vorigen Ansprüche, bei welchem die Kurzzeitbatterie (11) derart ausgelegt ist, daß die in ihr gespeicherte Energie zum Entgegenwirken von Drehungleichförmigkeiten der Welle (10) geeignet ist, wobei die elektrische Maschine die Welle (10) bei einer negativen Drehungleichförmigkeit mit einem beschleunigenden Drehmoment beaufschlagen kann.

15. Antriebssystem nach einem der vorigen Ansprüche, bei welchem die Kurzzeitbatterie (11) derart ausgelegt ist, daß sie mit der beim Entgegenwirken von Drehungleichförmigkeiten der Welle (4) gewonnenen Energie ladbar ist, wobei die elektrische Maschine (4) die Welle (10) bei einer positiven Drehungleichförmigkeit mit einem bremsenden Drehmoment beaufschlagen kann.

16. Antriebssystem nach einem der vorigen Ansprüche, bei welchem die Kurzzeitbatterie (11) derart ausgelegt ist, daß sie mit der beim Bremsen der Welle (10) zur Verringerung des Antriebsschlupfs gewonnenen Energie ladbar ist.

17. Antriebssystem nach einem der vorigen Ansprüche, bei welchem die Kurzzeitbatterie (11) derart ausgelegt ist, daß die in ihr gespeicherte Energie zum Beschleunigen der Welle (10) zur Getriebesynchronisation geeignet ist, und sie mit der beim Bremsen der Welle (10) zur Getriebesynchronisation gewonnenen Energie ladbar ist.

18. Antriebssystem nach einem der vorigen Ansprüche, bei welchem neben der Kurzzeitbatterie (11) noch eine Langzeitbatterie (13) vorgesehen ist.

19. Antriebssystem nach einem der vorigen Ansprüche, bei welchem neben der Kurzzeitbatterie (11) noch ein Kondensator (12) vorgesehen ist.

## Claims

1. A drive system with
- an internal combustion engine (1) that acts as a drive motor of a motor vehicle,
- an inverter-controlled rotary-current electrical machine (4), which furnishes additional driving action,
- an inverter (14) with an intermediate circuit at a voltage level higher than a low-voltage network,
- at least one battery (11), which lies at the elevated voltage level of the intermediate circuit and which furnishes the energy required during the driving action of the electrical machine (4),
**characterised in that** the rotary-current machine occasionally supports the internal combustion engine (1) as a drive by it providing drive action in phases of high demand for overall drive performance, specifically in phases of the vehicle acceleration, in addition to the internal combustion engine,
and **in that** the battery (11) is a short-duty battery having a discharge time of less than 7 minutes.

2. A drive system according to Claim 1, in which the electrical machine (4) also provides braking action and the energy generated in this process can be saved up at least partially in the short-duty battery (11).

3. A drive system according to one of the previous claims, in which the short-duty battery (11) has a discharge time of 4 minutes.

4. A drive system according to one of the previous claims, in which the maximum discharge current of the short-duty battery (11) is more than 10 CA, in particular 15 CA.

5. A drive system according to one of the previous claims, in which the pulse current of the short-duty battery (11) is more than 100 A, in particular 120 A.

6. A drive system according to one of the previous claims, in which the short-duty battery (11) has a power density of more than 250 W/kg, in particular 300 W/kg.

7. A drive system according to one of the previous claims, in which the short-duty battery (11) has an overall capacity of less than 1200 Ah, in particular 1000 Ah.

8. A drive system according to one of the previous claims, in which the short-duty battery (11) is a secondary alkaline system.

9. A drive system according to one of the previous claims, in which the short-duty battery (11) is a nickel/cadmium system.

10. A drive system according to one of the previous claims, in which the short-duty battery (11) is a nickel/iron system.

11. A drive system according to one of the previous claims, in which the short-duty battery (11) has at least one sinter electrode (23).

12. A drive system according to one of the previous claims, in which the short-duty battery (11) has at least one fibre-structure electrode.

13. A drive system according to one of the previous claims, in which the short-duty battery (11) is designed so that the energy stored up in it is suitable for starting the internal combustion engine (1).

14. A drive system according to one of the previous claims, in which the short-duty battery (11) is designed so that the energy stored up in it is suitable for counteracting rotational nonuniformities of the shaft (10), wherein the electrical machine can load the shaft (10) with an accelerating torque in the case of a negative rotational non-uniformity.

15. A drive system according to one of the previous claims, in which the short-duty battery (11) is designed so that it can be charged with the energy obtained when counteracting rotational nonuniformities of the shaft (4), wherein the electrical machine (4) can load the shaft (10) with a braking torque in the case of a positive rotational non-uniformity.

16. A drive system according to one of the previous claims, in which the short-duty battery (11) is designed so that it can be charged with the energy gained when braking the shaft (10) to reduce the drive slip.

17. A drive system according to one of the previous claims, in which the short-duty battery (11) is designed so that the energy stored up in it is suitable for accelerating the shaft (10) to provide transmission synchronization, and it can be charged with the energy obtained when braking the shaft (10) for the transmission synchronization.

18. A drive system according to one of the previous claims, in which a long-duty battery (13) is also provided besides the short-duty battery (11).

19. A drive system according to one of the previous claims, in which a capacitor (12) is also provided besides the short-duty battery (11).

## Revendications

1. Système d'entraînement incluant:
- un moteur (1) à combustion interne intervenant comme moteur d'entraînement d'un véhicule à moteur,
- une machine électrique (4) à courant triphasé commandée par onduleur, qui intervient également comme entraînement,
- un onduleur (14) comportant un circuit intermédiaire dont le niveau de tension est supérieur à celui d'un réseau à basse tension,
- au moins une batterie (11), qui est au niveau de tension élevé du circuit intermédiaire et qui fournit l'énergie nécessaire lorsque la machine électrique (4) exerce un effet d'entraînement.
**caractérisé en ce que** la machine électrique assiste temporairement pour l'entraînement le moteur (1) à combustion interne, en exerçant un effet d'entraînement additionnel à celui du moteur (1) à combustion interne dans des phases où la puissance totale d'entraînement exigée est élevée, c'est-à-dire des phases d'accélération du véhicule, et **en ce que**
la batterie (11) est une batterie de durée brève dont la durée de décharge est inférieure à 7 minutes.

2. Système d'entraînement selon la revendication 1, dans lequel la machine électrique (4) exerce également un effet de freinage et l'énergie ainsi produite peut être emmagasinée au moins partiellement dans la batterie (11) temporaire.

3. Système d'entraînement selon l'une quelconque des revendications précédentes, dans lequel la durée de décharge de la batterie temporaire (11) est de 4 minutes.

4. Système d'entraînement selon l'une quelconque des revendications précédentes, dans lequel le courant maximal de décharge de la batterie temporaire (11) est supérieur à 10 CA, en particulier égal à 15 CA.

5. Système d'entraînement selon l'une quelconque des revendications précédentes, dans lequel le courant d'impulsion de la batterie temporaire (11) est supérieur à 100 A, en particulier égal à 120 A.

6. Système d'entraînement selon l'une quelconque des revendications précédentes, dans lequel la densité de puissance de la batterie temporaire (11) est supérieure à 250 W/kg, en particulier égale à 300 W/kg.

7. Système d'entraînement selon l'une quelconque des revendications précédentes, dans lequel la capacité totale de la batterie temporaire (11) est inférieure à 1200 Ah, en particulier égale à 1000 Ah.

8. Système d'entraînement selon l'une quelconque des revendications précédentes, dans lequel la batterie temporaire (11) est un système secondaire alcalin.

9. Système d'entraînement selon l'une quelconque des revendications précédentes, dans lequel la batterie temporaire (11) est un système nickel/cadmium.

10. Système d'entraînement selon l'une quelconque des revendications précédentes, dans lequel la batterie temporaire (11) est un système nickel/fer.

11. Système d'entraînement selon l'une quelconque des revendications précédentes, dans lequel la batterie temporaire (11) comporte au moins une électrode frittée (23).

12. Système d'entraînement selon l'une quelconque des revendications précédentes, dans lequel la batterie temporaire (11) comporte au moins une électrode à structure fibreuse.

13. Système d'entraînement selon l'une quelconque des revendications précédentes, dans lequel la batterie temporaire (11) est agencée d'une manière telle que l'énergie qui y est emmagasinée est adaptée au démarrage du moteur à combustion (1).

14. Système d'entraînement selon l'une quelconque des revendications précédentes, dans lequel la batterie temporaire (11) est agencée d'une manière telle que l'énergie qui y est emmagasinée est adaptée à s'opposer à des irrégularités de rotation de l'arbre (10), la machine électrique pouvant communiquer à l'arbre (10) un couple d'accélération en cas d'irrégularité négative de rotation.

15. Système d'entraînement selon l'une quelconque des revendications précédentes, dans lequel la batterie temporaire (11) est agencée d'une manière telle qu'elle peut être chargée au moyen de l'énergie produite lorsqu'elle s'oppose à des irrégularités de rotation de l'arbre (10), la machine électrique (4) pouvant communiquer à l'arbre (10) un couple de freinage en cas d'irrégularité positive de rotation.

16. Système d'entraînement selon l'une quelconque des revendications précédentes, dans lequel la batterie temporaire (11) est agencée d'une manière telle qu'elle peut être chargée au moyen de l'énergie produite lorsque l'arbre (10) est freiné pour réduire le glissement d'entraînement.

17. Système d'entraînement selon l'une quelconque des revendications précédentes, dans lequel la batterie temporaire (11) est agencée d'une manière telle que l'énergie qui y est emmagasinée est apte à accélérer l'arbre (10) pour une synchronisation de boîte de vitesses et qu'elle peut être chargée au moyen de l'énergie produite lorsque l'arbre (10) est freiné pour la synchronisation de la boîte de vitesses.

18. Système d'entraînement selon l'une quelconque des revendications précédentes, dans lequel une batterie de longue durée (13) est prévue en plus de la batterie temporaire (11).

19. Système d'entraînement selon l'une quelconque des revendications précédentes, **caractérisé en ce qu'**un condensateur (12) est prévu en plus de la batterie temporaire (11).
